# EUROPÄISCHE PATENTSCHRIFT

(11) **EP 0 562 279 B1**
(45) Veröffentlichungstag und Bekanntmachung des Hinweises auf die Patenterteilung: **06.12.1995**
(21) Anmeldenummer: 93102598.5
(22) Anmeldetag: 19.02.1993
(51) Int. Cl.: F21V 8/00, F21M 3/05, B60Q 1/00

(54) **Beleuchtungseinrichtung für Fahrzeuge**
Lighting system for vehicles
Dispositif d'éclairage pour véhicules automobiles

(30) Priorität: 27.03.1992 DE 4209957
(43) Veröffentlichungstag der Anmeldung: 29.09.1993
(73) Patentinhaber: ROBERT BOSCH GMBH, 70442 Stuttgart (DE)
(72) Erfinder: Lietar, Christian Dipl.-Ing., CH-1110 Morges (CH)

(56) Entgegenhaltungen:
- EP-A- 0 401 711
- GB-A- 2 245 052
- US-A- 4 241 382

## Beschreibung

Die Erfindung geht aus von einer Beleuchtungseinrichtung für Fahrzeuge nach der Gattung des Anspruchs 1.

Eine solche Beleuchtungseinrichtung ist durch die EP-A-0 401 711 bekannt. Diese Beleuchtungseinrichtung weist eine Lichtquelle auf, die aus einem Leuchtkörper und einem diesen umschließenden Reflektor in Form eines Hohlkörpers besteht. Der Reflektor weist einen als Ellipsoid ausgebildeten Teil auf, im Bereich von dessen erstem Brennpunkt der Leuchtkörper angeordnet ist und der vom Leuchtkörper ausgesandtes Licht auf die im Bereich des zweiten Brennpunkts des Ellipsoidteils angeordnete Eintrittsfläche eines vom Reflektor abfürenden Lichtwellenleiterbündels richtet. Durch das Lichtwellenleiterbündel wird das Licht zu einem Lichtverteiler geleitet, durch den das Licht verteilt wird. Der Reflektor weist außerdem einen als Teil einer Kugeloberfläche ausgebildeten Kugelteil auf, dessen Krümmungsmittelpunkt im Bereich des ersten Brennpunkts des Ellipsoidteils liegt und der dem Ellipsoidteil in Richtung der von diesem reflektierten Lichtstrahlen gegenüberliegend angeordnet ist. Die Beleuchtungseinrichtung ist für eine Signaleinrichtung vorgesehen, bei der eine gleichmäßige Beleuchtung erforderlich ist, das heißt die Eintrittsfläche des Lichtwellenleiters mit gleichmäßiger Beleuchtungsstärke beleuchtet wird das aus dem Lichtverteiler austretende Licht ebenfalls eine gleichmäßige Beleuchtungsstärkeverteilung erzeugt. Diese bekannte Beleuchtungseinrichtung ist daher zur Verwendung bei einem Fahrzeug nicht geeignet, wo mit einer gleichmäßigen Beleuchtungsstärkeverteilung keine günstigen Sichtbedingungen für den Fahrzeuglenker erreicht werden können.

### Vorteile der Erfindung

Die Beleuchtungseinrichtung mit den Merkmalen gemäß Anspruch 1 hat demgegenüber den Vorteil, daß diese eine Beleuchtung eines zentralen Bereichs vor dem Fahrzeug mit hoher Beleuchtungsstärke ermöglicht und somit zur Verwendung bei einem Fahrzeug geeignet ist. Die hohe Beleuchtungsstärke in einem zentralen Bereich vor dem Fahrzeug wird dabei durch die spezielle Zuordnung der im Zentrum der Eintrittsfläche des Lichtwellenleiterbündels angeordneten Lichtwellenleiter zu dem Licht in den zentralen Bereich vor dem Fahrzeug leitenden Teil des Lichtverteilers erreicht.

In den Unteransprüchen sind vorteilhafte Ausgestaltungen und Weiterbildungen der Erfindung gekennzeichnet. Bei der Verwendung einer Gasentladungslampe als Lichtquelle, wie im Anspruch 2 gekennzeichnet, steht ein sehr großer Lichtstrom zur Einspeisung in das Lichtwellenleiterbündel zur Verfügung. Mit der im Anspruch 3 angegebenen numerischen Exzentrizität wird durch den als Ellipsoid ausgebildeten Teil des Reflektors das von der Gasentladungslampe ausgesandte Licht mit hohem Wirkungsgrad in das Lichtwellenleiterbündel eingespeist. Durch die in den Ansprüchen 4 und 5 gekennzeichneten Ausbildungen ist eine Einspeisung des Lichts in das Lichtwellenleiterbündel in der für die durch den Lichtverteiler bewirkte Lichtverteilung erforderlichen Weise erreicht. Bei der im Anspruch 7 gekennzeichneten Anordnung von mehreren Lichtwellenleiterbündeln können mehrere Lichtverteiler mit unterschiedlichen Lichtverteilungscharakteristiken wahlweise mit Licht versorgt werden und so, wie im Anspruch 10 gekennzeichnet, eine Abblendlicht- und Fernlichtfunktion erzielt werden.

### Zeichnung

Zwei Ausführungsbeispiele der Erfindung sind in der Zeichnung dargestellt und in der nachfolgenden Beschreibung näher erläutert. Es zeigen Figur 1 eine Beleuchtungseinrichtung mit einem Reflektor im Längsschnitt nach einem ersten Ausführungsbeispiel, Figur 2 die von der Beleuchtungseinrichtung erzeugte Lichtverteilung, Figur 3 den Verlauf der Beleuchtungsstärke über der Eintrittsfläche eines Lichtwellenleiterbündels, Figur 4 eine erste Variante und Figur 5 eine zweite Variante der Anordnung der Lichtwellenleiter des Lichtwellenleiterbündels und Figur 6 ein zweites Ausführungsbeispiel der Beleuchtungseinrichtung.

### Beschreibung der Ausführungsbeispiele

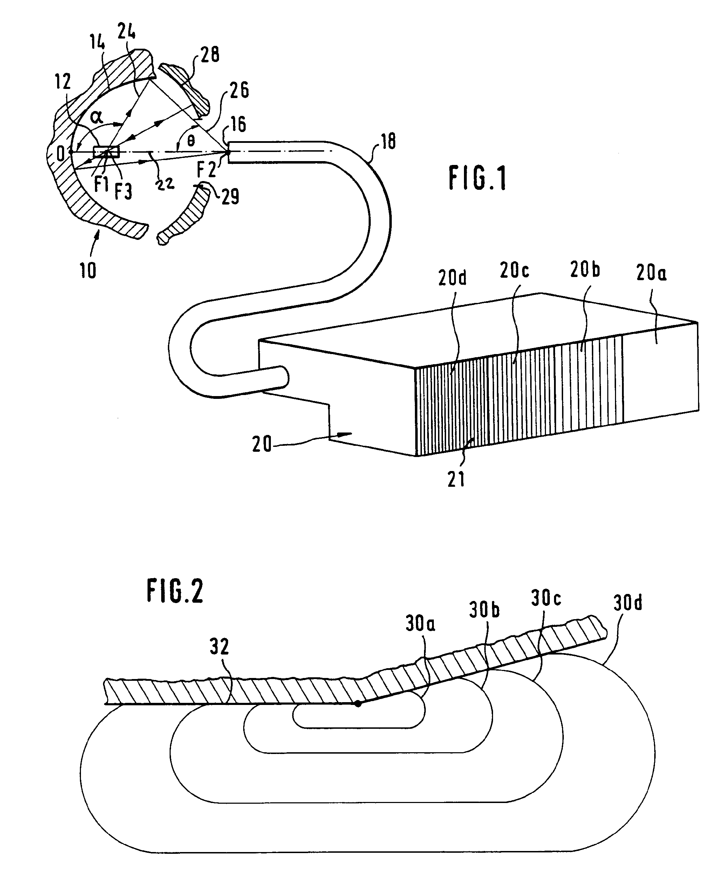

Eine in Figur 1 dargestellte Beleuchtungseinrichtung für Fahrzeuge nach einem ersten Ausführungsbeispiel weist eine Lichtquelle auf, die aus einem Reflektor 10 und einem innerhalb von diesem angeordneten Leuchtkörper 12 besteht. Der Reflektor 10 weist einen Teil 14 auf, der als Ellipsoid ausgebildet ist. Der Leuchtkörper 12 ist im Bereich des ersten Brennpunkts F1 des Ellipsoids 14 angeordnet. Im Bereich des zweiten Brennpunkts F2 ist die Eintrittsfläche 16 eines Lichtwellenleiterbündels 18 angeordnet. Das Lichtwellenleiterbündel 18 besteht aus einer Vielzahl einzelner Lichtwellenleiter, bespielsweise Glasfasern, die verschiedene Querschnittsformen aufweisen können. Das Lichtwellenleiterbündel 18 leitet das Licht des Leuchtkörpers 12 zu einem Lichtverteiler 20, durch den dieses in der für die Erzielung einer gewünschten Lichtverteilung erforderlichen Weise verteilt wird.

Der Ellipsoidteil 14 des Reflektors 10 erstreckt sich ausgehend von dessen Scheitel bis unter einem Winkel α zwischen der Verbindungsachse 22 zwischen den beiden Brennpunkten F1 und F2 und einer an das Ellipsoid 14 gelegten Linie 24 durch dessen ersten Brennpunkt F1. Der unter dem Winkel α zur Verbindungsachse 22 ausgestrahlte Grenzlichtstrahl 26 des Leuchtkörpers 12 wird durch das Ellipsoid 14 reflektiert und verläuft nach der Reflexion unter dem Winkel ϑ zur Verbindungsachse 22 geneigt. Mit zunehmendem Winkel α wird auch der Winkel ϑ größer. Das auf die Eintrittsfläche 16 des Lichtwellenleiterbündels 18 treffende Licht kann jedoch nur bis zu einem von den Materialeigenschaften der Lichtwellenleiter bestimmten Winkel ϑ in das Lichtwellenleiterbündel 18 eintreten und durch dieses weitergeleitet werden.

Der Reflektor 10 weist an den sich bis zum Winkel α erstreckenden Ellipsoidteil 14 anschließend einen Teil 28 auf, der kugelförmig ausgebildet ist, wobei dessen Krümmungsmittelpunkt F3 im Bereich des ersten Brennpunkts F1 des Ellipsoids 14 liegt. Der Kugelteil 28 ist dem Scheitel des Ellipsoids 14 gegenüberliegend angeordnet, so daß von dem Leuchtkörper 12 ausgesandtes und auf den Kugelteil 28 treffendes Licht von diesem auf den Ellipsoidteil 14 reflektiert wird und von diesem in den Bereich des zweiten Brennpunkts F2. Hierdurch kann auch das vom Leuchtkörper 12 unter größeren Winkeln α zur Verbindungsachse 22 ausgestrahlte Licht in das Lichtwellenleiterbündel 18 eingespeist werden. Der Kugelteil 28 weist eine Öffnung 29 zum Durchtritt des Lichtwellenleiterbündels 18 oder des Lichts auf. Als Leuchtkörper 12 dient vorzugsweise der Lichtbogen einer nicht näher dargestellten Gasentladungslampe, der sich etwa auf der Verbindungsachse 22 des Ellipsoids 14 erstreckt. Das Ellipsoid 14 weist bei der Verwendung einer Gasentladungslampe vorzugsweise eine numerische Exzentrizität E zwischen 0,55 und 0,72 auf.

Der Lichtverteiler 20 weist verschiedene Teile 20a bis 20d auf, die Licht in unterschiedlicher Weise, beispielsweise mittels Linsen 21 verteilen. Jeder der Teile 20a bis 20d ist mit einem bestimmten Teil des Lichtwellenleiterbündels 18 verbunden. In Figur 2 ist als Beispiel eine Abblendlichtverteilung dargestellt, wie sie vom Lichtverteiler 20 bei entsprechender Auslegung erzeugt wird. Die Abblendlichtverteilung ist anhand mehrerer Isoluxlinien 30a bis 30d, das sind Linien gleicher Lichtstärke, auf einem vor dem Lichtverteiler 20 angeordneten Meßschirm dargestellt, wobei in deren Zentrum die höchste Lichtstärke vorhanden ist. Die Abblendlichtverteilung weist eine Helldunkelgrenze 32 auf, deren Verlauf in gesetzlichen Bestimmungen vorgeschrieben ist.

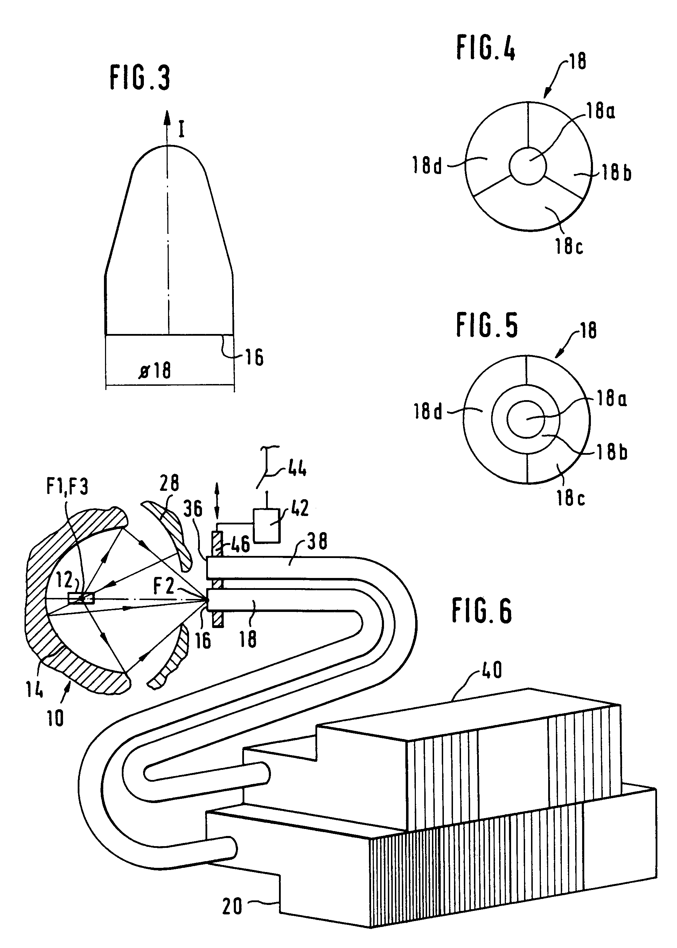

In Figur 3 ist der Verlauf der Beleuchtungsstärke über der Eintrittsfläche 16 des Lichtwellenleiterbündels 18 dargestellt, wie er für eine optimale Verteilung des Lichts durch den Lichtverteiler 20 erforderlich ist. Die Beleuchtungsstärke ist dabei im Zentrum des Lichtwellenleiterbündels 18 am größten und nimmt zu dessen Rand hin ab. Die Lichtwellenleiter, deren Eintrittsflächen im Zentrum 18a der Eintrittsfläche 16 des Lichtwellenleiterbündels 18 angeordnet sind, und auf die die höchste Beleuchtungsstärke trifft, sind mit dem Teil 20a des Lichtverteilers 20 verbunden, der Licht in das Zentrum 30a der Abblendlichtverteilung leitet. Hierdurch wird die dort gewünschte hohe Lichtstärke erzielt. Entsprechend sind die in den Randbereichen des Lichtwellenleiterbündels 18 angeordneten Lichtwellenleiter mit den Teilen 20b bis 20d des Lichtverteilers 20 verbunden, die Licht in die Randbereiche 30b bis 30d der Abblendlichtverteilung leiten. Durch die Teile 20b bis 20d des Lichtverteilers 20 wird dabei Licht zunehmend gestreut, so daß durch diese die zunehmend größer werdenden Bereiche 30b bis 30d ausgeleuchtet werden. Dadurch, daß sich die von den Teilen 20b bis 20d ausgeleuchteten Bereiche 30b bis 30d jeweils in deren mitteleren Bereichen überlagern, ergibt sich eine zu den Rändern der Abblendlichtverteilung hin abnehmende Lichtstärke.

Bei einer in Figur 4 dargestellten ersten Variante des Lichtwellenleiterbündels 18 sind die mit den die Randbereiche der Abblendlichtverteilung ausleuchtenden Teilen 20b bis 20d des Lichtverteilers 20 verbundenen Lichtwellenleiter in das Zentrum 18a des Lichtwellenleiterbündels 18 umgebenden segmentartigen Bereichen 18b bis 18d angeordnet. Bei einer in Figur 5 dargestellten zweiten Variante des Lichtwellenleiterbündels 18 sind die mit dem den Bereich 30b ausleuchtenden Teil 20b des Lichtverteilers 20 verbundenen Lichtwellenleiter in einem das Zentrum 18a des Lichtwellenleiterbündels 18 umschließenden Bereich 18b angeordnet, während die übrigen Lichtwellenleiter in den Bereich 18b umschließenden segmentartigen Bereichen 18c und 18d angeordnet sind. Die einzelnen Lichtwellenleiter der verschiedenen Bereiche 18a bis 18d sind in der Eintrittsfläche 16 anders verteilt angeordnet als in deren mit dem Lichtverteiler 20 verbundenen Austrittsfläche, da sie nicht exakt gleichmäßig beleuchtet werden und bei gleicher Anordnung sich ein ungleichmäßiger Lichtaustritt aus dem Lichtverteiler 20 ergeben würde. Entsprechend der für die verschiedenen Teile 20a bis 20d des Lichtverteilers 20 erforderlichen Lichtstärkewerte kann die Anzahl der mit diesen Teilen verbundenen Lichtwellenleiter unterschiedlich sein. Dabei sind beispielsweise mit dem Teil 20a, der Licht in das Zentrum 30a der Abblendlichtverteilung leitet, die meisten Lichtwellenleiter verbunden und mit den die Randbereiche 30b bis 30d ausleuchtenden Teilen 20b bis 20d entsprechend weniger Lichtwellenleiter verbunden.

In Figur 6 ist ein zweites Ausführungsbeispiel der Beleuchtungseinrichtung dargestellt, bei dem ein wie beim ersten Ausführungsbeispiel beschriebener Reflektor 10 vorgesehen ist. Im Gegensatz zum ersten Ausführungsbeispiel sind hier jedoch zwei Lichtwellenleiterbündel 18 und 38 vorgesehen, die jeweils mit einem Lichtverteiler 20 und 40 verbunden sind. Der erste Lichtverteiler 20 ist wie vorstehend beschrieben so ausgelegt, daß durch diesen das aus dem ersten Lichtwellenleiterbündel 18 austretende Licht in der in Figur 2 dargestellten Abblendlichtverteilung verteilt wird. Der zweite Lichtverteiler 40 ist so ausgelegt, daß durch diesen das aus dem zweiten Lichtwellenleiterbündel 38 austretende Licht in einer Fernlichtverteilung verteilt wird, die im Unterschied zur Abblendlichtverteilung keine Helldunkelgrenze aufweist. In einer Betriebsstellung für Abblendlicht befindet sich die Eintrittsfläche des ersten Lichtwellenleiterbündels 18 im Bereich des zweiten Brennpunkts F2 des Ellipsoidteils 14 des Reflektors 10, so daß in diesen Licht eingespeist wird. In der Betriebsstellung für Fernlicht befindet sich entsprechend die Eintrittsfläche des zweiten Lichtwellenleiterbündels 38 im Bereich des zweiten Brennpunkts F2. Die für die Umschaltung zwischen den Betriebsstellungen für Abblendlicht und Fernlicht erforderliche Bewegung der Lichtwellenleiterbündel 18 und 38 kann durch eine Vorrichtung 42 bewirkt werden, die automatisch mit dem Lichtschalter 44 des Fahrzeugs betätigt wird. Die Enden der Lichtwellenleiterbündel 18 und 38 können in einem Träger 46 gehalten sein, der beispielsweise zwischen den beiden Stellungen verschiebbar oder verdrehbar ist.

Der zweite Lichtverteiler 40 muß nicht zur Erzeugung einer Fernlichtverteilung ausgelegt sein, sondern kann auch beispielsweise zur Erzeugung einer Lichtverteilung ausgelegt sein, wie sie bei Nebel günstig ist.

Desweiteren können auch drei Lichtwellenleiterbündel vorhanden sein, die wahlweise zur Erzeugung von Abblendlicht, Fernlicht oder Nebellicht dienen.

## Patentansprüche

1. Beleuchtungseinrichtung für Fahrzeuge mit einer Lichtquelle, die aus einem Leuchtkörper (12) und einem diesen umschließenden Reflektor (10) in Form eines Hohlkörpers besteht, der zumindest einen als Ellipsoid ausgebildeten Teil (14) aufweist, im Bereich von dessen erstem Brennpunkt (F1) der Leuchtkörper (12) angeordnet ist, und der vom Leuchtkörper (12) ausgesandtes Licht auf die im Bereich des zweiten Brennpunkts (F2) des Ellipsoidteils (14) angeordnete Eintrittsfläche (16) eines vom Reflektor (10) abführenden Lichtwellenleiterbündels (18) richtet, das das Licht zu einem Lichtverteiler (20) führt, durch den das Licht verteilt wird, wobei der Reflektor (10) außerdem wenigstens einen als Teil einer Kugeloberfläche ausgebildeten Kugelteil (28) aufweist, dessen Krümmungsmittelpunkt (F3) im Bereich des ersten Brennpunkts (F1) des Ellipsoidteils (14) liegt und der dem Ellipsoidteil (14) in Richtung der von diesem reflektierten Lichtstrahlen gegenüberliegt, dadurch gekennzeichnet, daß die Beleuchtungsstärke im Zentrum der Eintrittsfläche (16) des Lichtwellenleiterbündels (18) am höchsten ist und zu deren Rand hin abnimmt und daß jeweils mehrere Lichtwellenleiter (18a bis 18d) des Lichtwellenleiterbündels (18) mit unterschiedliche Bereiche (30a bis 30d) vor dem Fahrzeug ausleuchtenden Teilen (20a bis 20d) des Lichtverteilers (20) verbunden sind, wobei im Zentrum der Eintrittsfläche (16) angeordnete Lichtwellenleiter (18a) mit dem Teil (20a) des Lichtverteilers (20) verbunden sind, der Licht in einen zentralen Bereich vor dem Fahrzeug leitet.

2. Beleuchtungseinrichtung nach Anspruch 1, dadurch gekennzeichnet, daß der Leuchtkörper (12) der Lichtbogen einer Gasentladungslampe ist, der etwa auf der Verbindungsachse (22) der beiden Brennpunkte (F1,F2) des Ellipsoidteils (14) angeordnet ist.

3. Beleuchtungseinrichtung nach Anspruch 2, dadurch gekennzeichnet, daß der Ellipsoidteil (14) eine numerische Exzentrizität E zwischen 0,55 und 0,72 aufweist.

4. Beleuchtungseinrichtung nach einem der Ansprüche 1 bis 3, dadurch gekennzeichnet, daß die mit den übrigen Teilen (20b bis 20d) des Lichtverteilers (20) verbundenen Lichtwellenleiter des Lichtwellenleiterbündels (18) in das Zentrum (18a) der Eintrittsfläche (16) umgebenden segmentartigen Bereichen (18b bis 18d) angeordnet sind.

5. Beleuchtungseinrichtung nach einem der Ansprüche 1 bis 3, dadurch gekennzeichnet, daß die mit den übrigen Teilen (20b bis 20d) des Lichtverteilers (20) verbundenen Lichtwellenleiter des Lichtwellenleiterbündels (18) in das Zentrum (18a) der Eintrittsfläche (16) etwa koaxial umgebenden Bereichen (18b bis 18d) angeordnet sind.

6. Beleuchtungseinrichtung nach einem der Ansprüche 1 bis 5, dadurch gekennzeichnet, daß jeweils eine zur Erzielung von bestimmten Beleuchtungsstärken in den vom Lichtverteiler (20) ausgeleuchteten Bereichen (30a bis 30d) erforderliche Anzahl von Lichtwellenleitern mit den Teilen (20a bis 20d) des Lichtverteilers (20) verbunden ist.

7. Beleuchtungseinrichtung nach einem der vorstehenden Ansprüche, dadurch gekennzeichnet, daß wenigstens zwei Lichtwellenleiterbündel (18, 38) vorgesehen sind, die jeweils mit einem Lichtverteiler (20, 40) verbunden sind, durch die unterschiedliche Lichtverteilungen erzeugt werden, wobei die Lichtwellenleiterbündel (18, 38) abwechselnd mit ihren Eintrittsflächen (16,36) in den Bereich des zweiten Brennpunkts (F2) des Ellipsoidteils (14) bringbar sind.

8. Beleuchtungseinrichtung nach Anspruch 7, dadurch gekennzeichnet, daß durch einen Lichtverteiler (20) eine Abblendlichtverteilung erzeugt wird und durch einen anderen Lichtverteiler (40) eine Fernlichtverteilung.

## Claims

1. Lighting device for vehicles, having a light source which consists of a luminous element (12) and a reflector (10) enclosing the former in the shape of a hollow body which has at least one part (14) constructed as an ellipsoid, in the region of whose first focus (F1) the luminous element (12) is arranged, and the light emitted by the luminous element (12) is directed onto the entry surface (16), arranged in the region of the second focus (F2) of the ellipsoid part (14), of a fibre-optic bundle (18), leading away from the reflector (10), which leads the light to a light distributor (20) by means of which the light is distributed, the reflector (10) having in addition at least one sphere part (28), designed as part of a surface of a sphere, the centre of curvature (F3) of which is located in the region of the first focus (F1) of the ellipsoid part (14) and which lies opposite the ellipsoid part (14) in the direction of the light beams reflected from the latter, characterized in that the illumination intensity is highest in the centre of the entry surface (16) of the fibre-optic bundle (18) and decreases towards its edge, and in that in each case a plurality of optical fibres (18a to 18d) of the fibreoptic bundle (18) are connected to parts (20a to 20d) illuminating different regions (30a to 30d) in front of the vehicle, optical fibres (18a) arranged in the centre of the entry surface (16) being connected to that part (20a) of the light distributor (20) which passes light into a central region in front of the vehicle.

2. Lighting device according to Claim 1, characterized in that the luminous element (12) is the arc from a gas discharge lamp which is arranged approximately on the axis (22) connecting the two foci (F1, F2) of the ellipsoid part (14).

3. Lighting device according to Claim 2, characterized in that the ellipsoid part (14) has a numerical eccentricity E between 0.55 and 0.72.

4. Lighting device according to one of Claims 1 to 3, characterized in that the optical fibres of the fibre-optic bundle (18) which are connected to the remaining parts (20b to 20d) of the light distributor (20) are arranged in segment-like regions (18b to 18d) surrounding the centre (18a) of the entry surface (16).

5. Lighting device according to one of Claims 1 to 3, characterized in that the optical fibres of the fibre-optic bundle (18) which are connected to the remaining parts (20b to 20d) of the light distributor (20) are arranged in segment-like regions (18b to 18d) approximately coaxially surrounding the centre (18a) of the entry surface (16).

6. Lighting device according to one of Claims 1 to 5, characterized in that in each case a number of optical fibres which are necessary to achieve specific illumination intensities in the regions (30a to 30d) illuminated by the light distributor (20) are connected to the parts (20a to 20d) of the light distributor (20).

7. Lighting device according to one of the preceeding claims, characterized in that at least two fibre-optic bundles (18, 38) are provided, which are connected in each case to a light distributor (20, 40), by means of which different light distributions are produced, the fibre-optic bundles (18, 38) being able to be brought alternately with their entry surfaces (16, 36) into the region of the second focus (F2) of the ellipsoid part (14).

8. Lighting device according to Claim 7, characterized in that a dipped headlamp distribution is produced by means of one light distributor (20) and a main headlamp distribution is produced by means of another light distributor (40).

## Revendications

1. Dispositif d'éclairage pour véhicules automobiles avec une source de lumière, qui se compose d'un corps lumineux (12) et d'un réflecteur (10) entourant celui-ci sous la forme d'un corps creux et qui présente au moins une partie (14) constituée sous la forme d'un ellipsoïde, le corps lumineux (12) étant disposé dans la zone du premier foyer (F1) de cet ellipsoïde, le réflecteur dirigeant la lumière émise par le corps lumineux (12) sur la surface d'entrée (16), disposée dans la zone du second foyer (F2) de l'ellipsoïde (14), d'un faisceau de guides d'ondes (18) partant du réflecteur (10), faisceau qui amène la lumière à un diffuseur de lumière (20) par lequel la lumière est diffusée, le réflecteur (10) présentant en outre au moins une partie sphérique (28) constituée sous la forme d'une surface sphérique, dont le centre de courbure (F3) se trouve dans la zone du premier foyer (F1) de l'ellipsoïde (14) et qui se trouve en regard de l'ellipsoïde (14) en direction des rayons lumineux réfléchis par celui-ci, dispositif d'éclairage caractérisé en ce que l'intensité lumineuse est à son maximum au centre de la surface d'entrée (16) du faisceau de guides d'ondes lumineuses (18) et décroît en direction de ses bords, et en ce que respectivement plusieurs guides d'ondes lumineuses (18a à 18d) du faisceau de guides d'ondes lumineuses (18) sont reliés à des parties (20a, 20d) du diffuseur de lumière (20) qui illuminent des zones différentes (30a à 30d) en avant du véhicule, le guide d'ondes lumineuses (18a) disposé au centre de la surface d'entrée (16) étant relié à la partie (20a) du diffuseur de lumière (20) qui dirige de la lumière dans une zone centrale en avant du véhicule.

2. Dispositif d'éclairage selon la revendication 1, caractérisé en ce que le corps lumineux (12) est l'arc électrique d'un tube à gaz lumineux, qui est disposé à peu près sur l'axe de liaison (22) des deux foyers (F1, F2) de l'ellipsoïde (14).

3. Dispositif d'éclairage selon la revendication 2, caractérisé en ce que l'ellipsoïde (14) présente une excentricité numérique E comprise entre 0,55 et 0,72.

4. Dispositif d'éclairage selon l'une des revendications 1 à 3, caractérisé en ce que les guides d'ondes lumineuses du faisceau de guides d'ondes lumineuses (18), qui sont reliés aux autres parties (20b à 20d) du diffuseur de lumière (20), sont disposés dans des zones (18b à 18d) en forme de segments, qui entourent le centre (18a) de la surface d'entrée (16).

5. Dispositif d'éclairage selon l'une des revendications 1 à 3, caractérisé en ce que les guides d'ondes lumineuses reliés aux autres parties (20b à 20d) du diffuseur de lumière (18), du faisceau de guides d'ondes lumineuses (18), sont disposés dans des zones (18b à 18d) qui entourent de façon à peu près coaxiale le centre (18a) de la surface d'entrée (16).

6. Dispositif d'éclairage selon l'une des revendications 1 à 5, caractérisé en ce qu'un nombre de guides d'ondes lumineuses nécessaire pour obtenir des intensités lumineuses déterminées dans les zones (30a à 30d) illuminées par le diffuseur de lumière (20), est relié aux parties (20a à 20d) du diffuseur de lumière (20).

7. Dispositif d'éclairage selon l'une des revendications précédentes, caractérisé en ce que l'on prévoit au moins deux faisceaux de guides d'ondes lumineuses (18, 38) qui sont respectivement reliés à un diffuseur de lumière (20, 40), par lesquels sont produites des diffusions différentes de lumière, les faisceaux de guides d'ondes lumineuses (18, 38) pouvant être placés alternativement, par leurs surfaces d'entrée (16, 36), dans la zone du second foyer (F2) de l'ellipsoïde (14).

8. Dispositif d'éclairage selon la revendication 7, caractérisé en ce que l'on produit une diffusion de lumière pour feux de croisement par l'un des diffuseurs de lumière (20), et une diffusion de lumière pour feux de route par un autre diffuseur de lumière (40).
